(19) Europäisches Patentamt

European Patent Office

Office européen des brevets

(11) Veröffentlichungsnummer: **0 141 247 B1**

# (12) EUROPÄISCHE PATENTSCHRIFT

(45) Veröffentlichungstag der Patentschrift: **02.05.91**

(21) Anmeldenummer: **84111430.9**

(22) Anmeldetag: **25.09.84**

(51) Int. Cl.⁵: **H04Q 3/545**, G06F 15/16, G06F 11/00

(54) **Multiprozessor-Rechner, insbesondere Multiprozessor-Zentralsteuereinheit eines Fernsprech-Vermittlungssystems.**

(30) Priorität: **26.09.83 DE 3334797**

(43) Veröffentlichungstag der Anmeldung:
**15.05.85 Patentblatt 85/20**

(45) Bekanntmachung des Hinweises auf die
Patenterteilung:
**02.05.91 Patentblatt 91/18**

(84) Benannte Vertragsstaaten:
**AT BE CH DE FR GB IT LI NL SE**

(56) Entgegenhaltungen:
**DE-A- 3 334 797**
**US-A- 3 931 613**
**US-A- 4 164 787**

**IBM TECHNICAL DISCLOSURE BULLETIN,
Band 21, Nr. 5, Oktober 1978, Seiten
1971-1972, New York, US; K.L. LEINER:
"Control for shared access to interleaved
store"**

(73) Patentinhaber: **Siemens Aktiengesellschaft
Wittelsbacherplatz 2
W-8000 München 2(DE)**

(72) Erfinder: **Bitzinger, Rudolf, Dipl.-Ing.
Lechbrucker Strasse 11
W-8000 München 71(DE)**
Erfinder: **Engl. Walter, Dipl.-Ing.
Am Kellerberg 4
W-8152 Feldkirchen-W.(DE)**
Erfinder: **Humml, Siegfried, Ing.
An der Freiheit 130
W-8122 Penzberg(DE)**
Erfinder: **Schreier, Klaus, Dipl.-Ing.
Nonnenwaldstrasse 8a
W-8122 Penzberg(DE)**

PROCEEDINGS OF THE 6TH INTERNATIONAL CONFERENCE ON PATTERN RECOGNITION, 19.-22. Oktober 1982, Seiten 250-254, IEEE, München, DE; G.C. NICOLAE et al.: "The ultrafast asynchronous bus - a basic component for efficient image processing"

ELEKTRONIK, Band 17, 1979, Seiten 25-34, München, DE; H. BARDACH et al.: "Systeme mit mehreren Mikroprozessoren"

INTERNATIONAL SWITCHING SYMPOSIUM, 25.-29. Oktober 1976, "paper 442.4", Seiten 1-8, Kyoto, JP; F.J. SCHRAMEL: "TCP 36 - a control complex for telephone switching centres"

CONFERENCE PROCEEDINGS OF THE 7TH ANNUAL SYMPOSIUM ON COMPUTER ARCHITECTURE, 6.-8. Mai 1980, Seiten 9-16, IEEE, New York, US; E.S. DAVIDSON: "A multiple stream microprocessor prototype system: AMP-1"

PROCEEDINGS OF THE IEEE NATIONAL AEROSPACE AND ELECTRONICS CONFERENCE, 19.-21. Mai 1981, Band 1, Seiten 350-356, IEEE, New York, US; M.J. ROSS et al.: "A distributed processing architecture for voice/data switching"

**Beschreibung**

Die Erfindung betrifft einen im Oberbegriff des Patentanspruchs 1 genannten Multiprozessor-Rechner.

Rechner gemäß dem Oberbegriff des Patentanspruchs 1, welche also aus einer höheren Anzahl von Prozessoren (wenn sie keine eigenen lokalen Speicher haben) bzw. Rechnern (wenn sie eigene lokale Speicher haben) mit Hilfe eines allen Prozessoren bzw. Rechnern gemeinsamen Bussystems gebildet werden, sind bekannt (US-PS 3 931 613) und können insbesondere als Zentralsteuereinheit für ein besonders großes Fernsprech-Vermittlungssystem verwendet werden. Bei einem solchen System ist häufig eine hohe Vielzahl von vermittlungstechnischen Funktionen simultan bzw. quasisimultan durchzuführen, wie z. B. die Überwachung des Teilnehmers auf Abheben und Rufnummernwahl, Wegesuche, Wegedurchschaltung, Signaltöne, Gebührenerfassung, Ansagen, Facilities verschiedenster Art, usw. Bei dem genannten bekannten Rechner sind jeweils bestimmte der auf den Bussen des Bussystems gebildeten Zeitkanäle fest zugeordnet. Wenn die Anzahl der Prozessoren größer als die Anzahl der auf dem Bussystem einrichtbaren Zeitkanäle ist, erfolgt die Zuordnung derart, daß jeweils Gruppen von Prozessoren ein Zeitkanal zugeordnet ist, wobei im Falle eines gleichzeitigen Zugriffswunsches von Prozessoren derselben Gruppe eine Prioritätsbehandlung selbst dann einsetzen muß, wenn die Prozessoren auf unterschiedliche Speicherbanken des Hauptspeichers zugreifen wollen.

Die Aufgabe der Erfindung besteht darin, den im Oberbegriff des Patentanspruchs 1 angegebenen Multiprozessor-Rechner so weiterzubilden, daß selbst bei einer großen Anzahl von Prozessoren im Hinblick auf Konfliktsituationen günstigere Verhältnisse geschaffen werden können.

Diese Aufgabe wird durch die im Patentanspruch 1 genannten Maßnahmen gelöst.

Diese Lösung bringt insofern einen konfliktarmen Betrieb mit sich, als den Prozessoren, soweit nicht ein Zugriffswunsch durch mehr als einen Prozessor auf ein und dieselbe Speicherbank vorliegt, grundsätzlich jeder der Zeitkanäle zur Verfügung steht.

Die in den Unteransprüchen angegebenen Maßnahmen gestatten zusätzlich Vorteile zu erreichen, nämlich die Maßnahme gemäß Patentanspruch 2, den Aufbau und die Betriebsweise des Multiprozessor-Rechners besonders einfach zu gestalten, und 3, den Fluß der Adressen und Informationen auf dem Bussystem besonders stark zu intensivieren und damit eine besonders hohe Verarbeitungskapazität des Multiprozessor-Rechners zu erreichen.

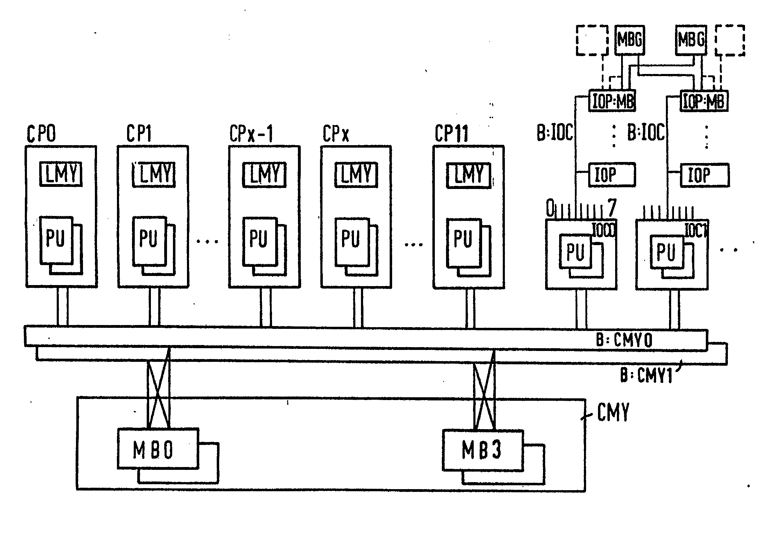

Die Erfindung wird anhand von einem Ausführungsbeispiel näher erläutert, welches in der Figur gezeigt ist.

Die Figur zeigt eine Zentralsteuereinheit, bei der zwölf Prozessoren CP, sowie mehrere Prozessoren IOC über das Bussystem B:CMY mit dem Hauptspeicher CMY zusammenarbeiten. Aus Sicherheitsgründen ist das Bussystem gedoppelt, vgl. B:CMY0 und B:CMY1, evtl. auch die Prozessoren CP/IOC. Jeder Prozessor enthält neben der eigentlichen, übrigens ebenfalls gedoppelten Prozessoreinheit PU bevorzugt jeweils einen prozessorindividuellen lokalen Speicher LMY. Die Prozessoren IOC haben z.B. acht besondere Ausgänge 0 bis 7 mit Bussen B:IOC, über die sie mit IO-Units IOP und peripheren Einheiten MBG des Fernsprech-Vermittlungssystems, z.B. mit Leitungsgruppensteuerungen, Koppelnetz, Geräte usw., kommunizieren.

Die - bevorzugt im wesentlichen untereinander gleichaufgebauten - Prozessoren CP führen, zumindest wenn genügend Verbindungsanforderungen vorliegen, simultan z.B. vermittlungstechnische, sicherungstechnische und/oder betriebstechnische Funktionen aus.

Bei dem in der Figur gezeigten Beispiel ist der an das Bussystem B:CMY angeschlossene Hauptspeicher CMY aus vier verschiedenen, überdies in sich jeweils aus Sicherheitsgründen gedoppelten Speicherbanken MB0... MB3 aufgebaut. Im Prinzip können alle Prozessoren CP/IOC über das Bussystem B:CMY Zugriff auf alle Daten des Hauptspeichers CMY bzw. auf alle Daten der Speicherbanken MB haben, soweit nicht - z.B. durch Beschränkung der Adressen - die Berechtigung des Zugriffs eingeschränkt wird.

Die Figur zeigt ferner periphere Einheiten MBG des Fernsprech-Vermittlungssystems, welche mittelbar oder unmittelbar auf die Leitungen des Vermittlungsnetzwerkes einwirken, z.B. im Rahmen der Wegesuche, Durchschaltung, Signalisierung, usw.. Diese peripheren Einheiten MBG sind hier gedoppelt, vgl. die Auskreuzungen der Leitungen. Sie besitzen im gezeigten Beispiel eigene IO-Units, vgl. IOP:MB. Es sind weitere solche IO-Units an die lokalen Busse B:IOC angeschlossen, vgl. IOP, welche jeweils zwar mit weiteren solchen peripheren Einheiten verbunden sind, die aber der Übersichtlichkeit wegen in der Figur nicht mehr gezeigt sind.

Diese IO-Units IOP:MB..IOP bzw. deren lokale Busse B:IOC sind über IO-Prozessoren IOC, vgl. IOC0, IOC1, mit dem Bussystem B:CMY verbunden. Durch Punkte wurde in der Figur angedeutet, daß noch weitere solche IO-Prozessoren IOC, insbesondere bei sehr großen Vermittlungssystemen, vorgesehen sein können.

Die peripheren Einheiten, vgl. MBG, sind jeweils mit verschiedenen der Prozessoren CP, von Fall zu Fall anders verteilt, verbindbar und/oder auch mit dem Hauptspeicher CMY, bzw. mit Teilen von dessen Speicherbanken MB,verbindbar. Durch diese Verbindungen können Meldungen und/oder Anfragen von peripheren Einheiten MBG, und Meldungen und/oder Anfragen zu solchen peripheren Einheiten MBG hin, durchgeführt werden. Die vermittlungstechnischen Meldungen und/oder Anfragen einer peripheren Einheit MBG werden dabei bevorzugt autonom über die mit ihnen verbundenen IO-Units IOP per Ruf verteilt, indem das jeweils betreffende IO-Unit IOP, wenn es einen Ruf von der peripheren Einheit MBG erhält, dieser rufenden peripheren Einheit MBG einen der Prozessoren CP, bzw. einen Teil des Hauptspeichers CMY bzw. MB, zuteilt bzw. über das Bussystem B:CMY zuteilen läßt. Diese Zuteilung eines speziellen Prozessors und/oder eines speziellen Teils des Hauptspeichers CMY/MB an die z.B. zwei peripheren Einheiten MBG (1 Verbindung belegt z.B. zwei MBGs) wird dann noch in einem Datenfeld abgespeichert, wobei dieses Datenfeld auch innerhalb einer Speicherbank MB des Hauptspeichers CMY angebracht sein kann. Durch diese Abspeicherungen im Datenfeld sind, insbesondere unter Mitwirkung der jeweils betroffenen IO-Units IOP der betroffenen peripheren Einheiten MBG,alle späteren Meldungen oder Anfragen der betroffenen peripheren Einheiten MBG,welche diesem Ruf nachfolgen, jeweils zum selben, vorher Zugeteilten Prozessor CP bzw. zum selben Hauptspeicherteil MB sendbar, damit dort die betreffenden vermittlungstechnischen Funktionen und/oder Registrierungen, welche durch den Ruf ausgelöst werden, fortgesetzt werden können.Eine solche autonome Zuteilung per Ruf ermöglicht eine angenähert gleichmäßige Belastung aller Prozessoren CP mit vermittlungstechnischen Funktionen - zumindest kann diese Zuteilung dann jeweils entsprechend der momentanen Auslastung der betreffenden Prozessoren CP so gesteuert werden, daß die dem Ruf folgenden Meldungen und/oder Anfragen wirklich jeweils rasch von einem der Prozessoren, der noch eine ausreichend freie Kapazität hat, bearbeitet werden können.

Die Auswahl bzw. die Verteilung der Prozessoren zur Durchführung der vermittlungstechnischen Funktionen, welche durch den Ruf ausgelöst werden, kann dabei zyklisch erfolgen, wobei aber bei Überlastung eines Prozessors CP dieser Prozessor im zyklischen Auswahlverfahren übersprungen wird. Durch eine solche zyklische Verteilung der Aufgaben bzw. Rufe auf die betreffenden Prozessoren ist eine zu einem hohen Grad gleichmäßige Auslastung der Prozessoren erreichbar. Rasch werden im allgemeinen alle Prozessoren mindestens eine gewisse Teilauslastung aufweisen. Es wird auch ein Fehler, bzw. die Neigung zu fehlerhaften Verarbeitungen, in den Prozessoren stets rasch findbar, wodurch mittels betriebstechnischer Funktionen, die bevorzugt von einem der Prozessoren CP durchgeführt werden, der betreffende fehlerhafte Prozessor vorläufig außer Betriebgesetzt und beim zyklischen Verteilen jeweils übersprungen werden kann, wobei auch eine - evtl. teilweise - Selbstheilung der Zentralsteuereinheit, z.B. mittels Ersatzschaltungen und Rettung von Speicherinhalten, durchgeführt werden kann.

Bei einem solchen Multiprozessor-Rechner, den diese Multiprozessor-Zentralsteuereinheit darstellt, fordert normalerweise simultan eine statistisch willkürlich verteilte beliebige Mehrzahl der Prozessoren CP/IOC einen Zugriff zum Hauptspeicher bzw. zu meistens unterschiedlichen Teilen MB davon an. Dann wird abwechselnd diesen jeweils verschiedenen Prozessoren, z.B. CP1, CPx, IOCO, das Bussystem B:CMY zugeteilt, wobei eine Arbitrierung über die Reihenfolge des Zugriffes in für sich bekannter Weise entscheiden kann, so daß die betreffenden Prozessoren CP/IOC zum an das Bussystem B:CMY angeschlossenen Hauptspeicher CMY/MB nacheinander bzw. abwechselnd, entsprechend den Arbitrierungen bzw. Zuteilungen des Bussystems B:CMY, Zugriff haben - wobei bei Bedarf die betreffenden Prozessoren CP/IOC auch mittelbar miteinander über den Hauptspeicher CMY/MB kommunizieren können.

Im allgemeinen kommuniziert mittelbar jeder dieser betreffenen Prozessoren jeweils mit einem anderen Bereich im Hauptspeicher CMY. Um die Wartezeiten dieser Prozessoren zu verringern, enthält der Hauptspeicher CMY mehrere, im gezeigten Beispiel vier, Speicherbanken MB mit jeweils einer eigenen Speichersteuerung.Diese eigene Speichersteuerung steuert jeweils ihre Speicherbank MB unabhängig von den Speichersteuerungen der übrigen Speicherbanken MB. So können diese Speicherbanken simultan betrieben werden.

Ferner sind auf dem Bussystem B:CMY nach den Zeitmultiplexprinzip Zeitrahmen mit Zeitschlitzen bzw. Zeitkanälen eingerichtet, wobei jeder Speichersteuerung jeweils einer oder mehrere der Zeitkanäle fest zugeordnet sind, und wobei den betreffenden, eine Kommunikation anfordernden Prozessoren CP, IOC zum quasisimultanen Zugriff auf die verschiedenen Speicherbanken MB jeweils Zeitschlitze bzw. Zeitkanäle zuteilbar sind. Dadurch kann die Dauer des zugeteilten Zeitschlitzes jeweils viel kürzer als die Dauer eines Speicherzyklusses sein. Daher ist bei diesem Beispiel zwar nur ein einziges Bussystem B:CMY angebracht, auf dem aber der Informationsfluß quasisimultan, d.h. stark verdichtet ist, was zu einer Verminderung des Hardwareaufwandes für das Bussystem, verglichen mit je einem eigenen Bussystem pro Speicherbank MB, beiträgt.

Bei der Erfindung, kann also quasisimultan mindestens eine Mehrzahl der Prozessoren CP/IOC, wenn nicht sogar alle diese Prozessoren, entsprechend der Anzahl der pro Zeitrahmen ihnen nach dem Zeitmultiplexprinzip jeweils zuteilbaren Zeitschlitze Zugriff zum Hauptspeicher CMY bzw.zu dessen Speicherbanken MB haben.Im Prinzip können pro Zeitrahmen auch mehrere Zeitschlitze jeder Speicherbank MB und/oder jedem kommunizierenden Prozessor CP/IOC zugeordnet bzw. zugeteilt sein. Durch diese Zeitmultiplex-Betriebsweise des Bussystems B:CMY müssen also nicht jeweils längere Dauern für Kommunikationen zwischen dem Hauptspeicher CMY und einem ersten beliebigen der Prozessoren CP/IOC abgewartet werden, bis ein anderer zweiter beliebiger Prozessor CPx/IOCx seinerseits endlich auf Daten des Speichers CMY zugreifen kann bzw. dort Daten hinterlegen kann. Diese Zeitmultiplexbetriebsweise ist demnach in Anbetracht der vielen, gleichzeitig parallelarbeitenden und mit jeweils verschiedenen Aufgaben befaßten Prozessoren CP/IOC zur Verkürzung der Zugriffszeit zum gemeinsamen Speicher CMY sehr vorteilhaft. Besonders vorteilhaft ist, daß der Hauptspeicher eine Vielzahl von unabhängig voneinander arbeitenden, oft im Vergleich zur Zeitschlitzdauer sehr langsam arbeitenden Speichersteuerungen bzw. Decodierern aufweist, wobei jeweils eine solche langsame Speichersteuerung einem der Prozessoren CP individuell vorübergehend für ganz kurze Dauer zugeordnet bzw. zugeteilt sein kann.

Die Schreibzyklen können bei der Erfindung demnach nach der Übernahme der Information in der Prozessor-Bussystem-Schnittstelle autonom vom Bussystem B:CMY weitergeleitet werden. Eine sofortige Quittung an den kommunizierenden Prozessor ermöglicht dessen sofortigen Weiterlauf, obwohl der betreffende Schreibzyklus zur Datenbank noch nicht abgeschlossen ist. Dies ermöglicht eine besonders hohe Kapazität bzw. Verarbeitungsgeschwindigkeit des Multiprozessor-Rechners.

Die Lesezyklen zu einer Speicherbank können sogar gem.einer Weiterbildung der Erfindung so verschachtelt ablaufen,daß der Rücktransfer der gelesenen Daten zeitgleich zur Übertragung der Adresse für einen folgenden Lesezugriff erfolgen kann. Darauf wird weiter unter noch näher eingegangen werden. Dies erhöht die Kapazität bzw. Verarbeitungsgeschwindigkeit nochmals deutlich.

Der Aufbau der einzelnen Organe dieses Multiprozessor-Rechners, z.B. der Prozessoren CP, der Speicherbanken MB bzw. des Hauptspeichers CMY, der IO-Prozessoren IOC welche z.B. auch eine verschiedene Anzahl von lokalen Systembussen B:IOC (vgl. die Ausgänge 0...7 des IO-Prozessores IOCO) haben können, kann jeweils an sich beliebig sein. Sie müssen nur zur Schnittstelle des gewählten Bussystems B:CMY passen bzw. an dessen Aufbau bzw. Betriebsweise angepaßt werden.

Im lokalen, prozessorindividuellen Speicher LMY können jeweils, zum Zwecke der Reduzierung der Zugriffe zum Hauptspeicher CMY, die für den Ablauf dynamisch wichtigen Codes und lokalen Daten abgespeichert werden.

Die peripheren Einheiten können ebenfalls an sich einen beliebigen Aufbau mit beliebigen Funktion aufweisen. Sie können sowohl gerätetechnische Organe darstellen als auch vermittlungstechnische Teilfunktionen von peripheren Organen, welche einen größeren Komplex verschiedener Funktionen ausführen. Trotz der forderbaren hohen Verfügbarkeit genügt es im allgemeinen, diese peripheren Organe über ungedoppelte, also einfach vorhandene IO- Units IOP:MB...IOP an die IO-Prozessoren IOC anzuschließen, wenn diese peripheren Organe, vgl. MBG, für sich über Auskreuzungen angeschlossen sind, vgl. die Figur. Diese IO-Units IOB und/ oder die zugehörigen IO-Prozessoren IOC können für sich zusätzliche Prüfungsfunktionen aufweisen, um unkontrollierte Zugriffe zu den Prozessoren CP/IOC und zum Hauptspeicher CMY/MB, welche auf Fehlern beruhen, zu erschweren.

Bei einem der entwickelten Beispiele gem. der Figur wurden für die Prozessoren CP jeweils SAB 80286-Mikroprozessoren verwendet, die jeweils über einen physikalischen Adressraum von 16 MByte verfügen. Für die IO-Units IOP wurden jeweils 8086-Bausteine verwendet. Die Prozessoren wurden zur Verbesserung der Fehlererkennung bevorzugt gedoppelt und waren dann jeweils nur paarweise abschaltbar. Die betreffenden Prozessorenpaare arbeiteten synchron. Bei Schreibzyklen wurden die Signale stets jeweils von einem bevorzugten Prozessor dieser Prozessorpaare genommen, bei Lesezyklen wurden aber jeweils beide Prozessoren des betreffenden Prozessorpaares versorgt.

Die Unterscheidung zwischen lokalem,prozessorindividuellen Speicher und Hauptspeicher wurde über die Adresse durchgeführt, d.h. die für den lokalen,prozessorindividuellen Speicher belegten Adressen waren im Hauptspeicher CMY/MB für dieses betreffende Prozessorpaar nicht direkt erreichbar. Die Kommunikation zwischen den Prozessoren erfolgte über das Bussystem B:CMY durch Setzen von Dringlichkeiten. Die aus Sicherheitsgründen gedoppelten Einheiten aus IO-Prozessor IOC, zugehörigem lokalen Bus B:IOC und IO-Unit IOP teilten sich im Regelfall die anfallenden Lasten. Der Datenaustausch zwischen den IO-Units IOP und den Prozessoren CP erfolgte bei diesem Beispiel über den Hauptspeicher CMY.

Auch die lokalen Busse B:IOC wurden im Zeitmultiplexbetrieb, d.h. mit Zyklenverschachtelung, betrieben, was den Durchsatz dieses Busses beträchtlich erhöhte, indem ein zweiter Zyklus schon dann angestoßen werden konnte, bevor ein erster Zyklus abgeschlossen war. Auch der Bus des Bussystems B:CMY war aus Sicherheitsgründen gedoppelt, ebenso wie der Hauptspeicher CMY bzw. seine Teile, vgl. die entsprechenden, symbolisch angedeuteten Leitungen in der Figur. Die in der Figur zusätzlich angedeuteten Auskreuzungen der Leitungen deuten an, daß bei Ausfall von Bauteilen, z.B. des Bussystemteils B...CMY1, stets Ersatzwege zum anderen Teil aller Zwillingsanordnungen zur Verfügung stehen.

Im Normalfall arbeiteten die beiden Busse des Bussystems B:CMY parallel und behandelten identische Informationen. Die Arbitrierung wurde vor der Zuteilung eines Zeitschlitzes an die Prozessoren CP/IOC durchgeführt,um die Leistung des Bussystems B:CMY zu steigern.Die Prioritäten des Arbiters können PROM-programmierbar sein.Eine möglichst gleichmäßige Belastung aller Speicherbanken MB kann z.B. durch die Zuordnung der Adressen zu diesen Speicherbanken über niederwertige Adressenbits,bei einem Interleaving-Raster von z.B. 8 Bytes, erreicht werden. Verschiedene andere Einzelheiten über dieses Beispiel sind auch in den parallel eingereichten Patentanmeldungen (0135 931, 0140 155, 0141 984, 0140 246) angegeben. Zu den peripheren Einheiten zählen übrigens auch O/M-Einheiten (Operation and Maintenance), die bei Zentralsteuereinheiten schon bisher oft verwendet werden, vgl. z.B. die Beschreibung von solchen Zentralsteuereinheiten, insbesondere dem Typs SSP112D in Siemens, telcom report 4 (1981), Beiheft "Digitalvermittlungssystem EWSD". In dieser Druckschrift ist auch insbesondere die Funktion von verschiedenen peripheren Einheiten weiter beschrieben.

Obwohl also bei der Erfindung nur ein Bussystem, nicht mehrere unabhängige Bussysteme, mit mehreren Prozessoren und mehreren parallel arbeitenden Datenbanken angebracht wird, können also quasisimultan Speicherzugriffe von unterschiedlichen Prozessoren zu unterschiedlichen Speicherbanken durchgeführt werden. Das Bussystem B:CMY arbeitete bei einem besonders einfachen Beispiel der Erfindung nach einem Zeitmultiplexverfahren mit vier Speicherbanken MB und vier Zeitschlitzen pro Zeitrahmen,was bei Verwendung von 12 Prozessoren CP für das betreffende Fernsprech-Vermittlungssystem, jedenfalls vorerst, ausreichte. Den vier Zeitschlitzen waren die vier Speicherbanken MB0...MB3 bzw. deren Speichersteuerungen so zugeordnet, daß jeder Zeitschlitz fest jeweils einer der vier Speicherbanken MB bzw. deren Speichersteuerungen zugeordnet war, was sich als vorerst ausreichend für dieses Fernsprechvermittlungssystem mit einigen zigtausend Teilnehmern erwies,wenn die, damit zyklisch nacheinander den Speichersteuerungen zugeordneten, Zeitschlitze mittels Arbitrierung jeweils nacheinander jenen Prozessoren, z.B. CP1, CPx, IOCO, die gleichzeitig Zugriff zur betreffenden einzigen Speicherbank, z.B. MB3, anforderten, zugeteilt wurden, und wenn die Taktfrequenz der Zeitschlitze höchstens um das T-fache höher lag als die durch den Speicheraufbau bedingte höchstzulässige Speicherzyklusfrequenz der Speichersteuerungen, wobei T die Anzahl der Speicherbanken MB des Hauptspeichers CMY beträgt. Diese Regel gilt auch, wenn T kleiner oder größer als vier ist. Wenn nur drei (zehn) Speicherbanken angeschlossen werden, werden eben drei (zehn) Zeitschlitze pro Zeitrahmen im einfachsten Beispiel benötigt, wenn die Dauer des Zeitrahmens angenähert gleich groß, bzw. geringfügig größer, als die Dauer eines Speicherzyklus ist. Im einfachsten Beispiel ist die Anzahl n der Zeitschlitze festlegbar durch die Übertragungsdauer $t_i$ einer Information und durch die Zykluszeit $t_s$ eines Speichers gemäß $n = {}^{t_s}/_{t_i}$: Bei einem Informationstransport auf den Bussystem mit 8MHz und bei einer Speicherzyklusfrequenz von 2MHz ergeben sich dann 4 Zeitschlitze pro Zeitrahmen, wodurch die Speicherzyklen zeitversetzt um 125 ns in den verschiedenen Speichern startbar bzw. beendbar sind. Aus der Dauer der Zeitschlitze (125 ns) errechnet sich auch die maximale Länge der Busleitungen, z.B.3m, wenn man die Einschwingeffekte klein halten will.

Abhängig von der jeweiligen Betriebsweise des Bussystems bzw. des Speicherzugriffes müssen aber jeweils ein, bei anderen Betriebsweisen auch mehrere, B:CMY-Zeitschlitze für einen Zugriff auf Speicherbank belegtwerden. Wenn mehrere (x)-Zeitschlitze pro Zeitrahmen einer Speicherbank zugeordnet werden, sollte dementsprechend die Zeitschlitz-Taktfrequenz entsprechend mehr als nur das T-fache (z.B. das xT-fache)der Speicherzyklusfrequenz betragen.

Bei einer schon oben erwähnten Weiterbildung der Erfindung sind die Lesezyklen besonders verschachtelt, was die Kapazität bzw. Verarbeitungsgeschwindigkeit weiter erhöht. Dazu sind

- einerseits die vieladrigen, insbesondere gedoppelten, Adressenübertragungs-Busleitungen des Bussystems B:CMY zum Hauptspeicher CMY/MB und
- andererseits die vieladrigen, insbesondere gedoppelten, Speicherinhaltübertragungs-Busleitungen des Bussystems B:CMY vom Hauptspeicher CMY/MB,

voneinander unabhängig in der Weise steuerbar, daß

- in einem ersten Zeitschlitz eine erste Adresse für Lese- und/oder Schreibvorgänge von einem ersten der Prozessoren, z.B. CPO, auf den Adressenübertragungs-Busleitungen zum Hauptspeicher CMY bzw. zu einer von dessen Speicherbanken MB übertragbar ist und

- gleichzeitig, also im ersten Zeitschlitz, ein gelesener Speicherinhalt, der zu einer anderen zweiten vorher übertragenen Adresse derselben Speicherbank MB gehört, zum betreffenden ersten oder einem anderen Prozessor, z.B. CPO oder CPx, auf den Speicherinhaltsübertragungs-Busleitungen vom Hauptspeicher CMY bzw. von dessen Speicherbanken MB übertragbar ist.

Die Lesezyklen verteilen sich also z.B. auf (mindestens) zwei Zeitrahmen, statt auf einen Zeitrahmen. (Anders verlaufen die Schreibzyklen: Diese Schreibzyklen belegen nur einen Zeitschlitz in einem einzigen Zeitrahmen, in dem die Adresse und die Schreibinformation über die Busleitungen übertragen werden). Bei den Lesezyklen werden also jeweils zwei, bevorzugt durch die Dauer eines einzigen Zeitmultiplex-Zeitrahmens getrennte Zeitschlitze belegt; der erste Zeitschlitz für die Übertragung der Leseadresse, der zweite Zeitschlitz für die Rückübertragung der aus der Speicherbank MB gelesenen Information. Zur Aufwandsreduzierung und zur Durchsatzsteigerung sind die Adreß- und Datenwege bzw. deren entsprechenden Leitungen voneinander unabhängig steuerbar, so daß zeitgleich zur Rückübertragung der gelesenen Informationen die Hinübertragung einer folgenden Leseadresse in einem und demselben Zeitschlitz möglich ist. Diese Zyklusgestaltung ist besonders vorteilhaft, da in vielen Multiprozessor-Rechneranwendungen die Lesezyklen mehr als doppelt so häufig sind wie die Schreibzyklen.

Zur Aufwandsreduzierung kann auch die Zugriffsarbitrierung für die Zuteilung eines Zeitschlitzes zu einem anfordernden Prozessor CP/IOC zeitschlitzweise durchgeführt werden, und zwar, zur Erzielung eines hohen Zyklendurchsatzes, dann bevorzugt im vorlaufenden Zeitschlitz bzw. in einem der kurz vorher liegenden Zeitschlitze.

Verglichen mit einem Zugriffssystem, das die Prozessoren über unabhängige Busse mit den einzelnen Speichern verbindet, läßt sich demnach bei der Erfindung der Schaltungsaufwand etwa fast auf 1/n-tel, bei n Zeitschlitzen pro Zeitrahmen, reduzieren.

## Ansprüche

1. Multiprozessor-Rechner, insbesondere Multiprozessor-Zentralsteuereinheit eines Fernsprechvermittlungssystems, mit
   - einem Bussystem (B:CMY), auf dessen Bus bzw. Bussen nach dem Zeitmultiplexprinzip-Zeitrahmen mit Zeitschlitzen bzw. Zeitkanälen eingerichtet sind, an welchem die ggf. einen eigenen lokalen Speicher (LMY) aufweisenden Prozessoren (SP, IOC) angeschlossen sind und
   - einem an das Bussystem (B;CMY) angeschlossenen Hauptspeicher (CMY), der mehrere Speicherbanken (MB) mit jeweils einer eigenen Speichersteuerung enthält, welche die eigene Speicherbank (MB), von der Speichersteuerung der übrigen Speicherbanken (MB) unabhängig steuert und zu welchem die Prozessoren (CP, IOC) über das Bussystem (B:CMY) abwechselnd Zugriff haben und über welchen bei Bedarf Prozessoren (CP, IOC) miteinander kommunizieren können, **dadurch gekennzeichnet**, daß jeder Speichersteuerung jeweils einer oder mehrere der dem Bus bzw. den Bussen des Bussystems (B:CMY) gebildeten Zeitkanäle fest zugeordnet sind, die zum quasisimultanen Zugriff der Prozessoren (CP; IOC) auf die verschiedenen Speicherbanken (MB) diesen Prozessoren zuteilbar sind.

2. Multiprozessor-Rechner nach Patentanspruch 1,
   **dadurch gekennzeichnet**, daß
   - jeder Speichersteuerung fest ein einziger Zeitkanal zugeordnet ist,
   - die damit zyklisch nacheinander den Speichersteuerungen zugeordneten Zeitschlitze mittels Arbitrierung jeweils jenen Prozessoren (z.B. CP1, CPx, IOCO), die Zugriff zur betreffenden Speicherbank (z.B. MB3) anfordern, zugeteilt werden, und
   - die Taktfrequenz der Zeitschlitze höchstens um das T-fache höher ist als die Speicherzyklusfrequenz der Speichersteuerungen, wenn T die Anzahl der Speicherbanken (MB) des Hauptspeichers (CMY) beträgt.

3. Multiprozessor-Rechner nach Patentanspruch 1 oder 2,
   **dadurch gekennzeichnet**, daß
   - einerseits die vieladrigen, insb. gedoppelten, Adressenübertragungs-Busleitungen des Bussystems (B:CMY) zum Hauptspeicher (CMY) und
   - andererseits die vieladrigen, insb. gedoppelten, Speicherinhaltübertragungs-Busleitungen des Bussystems (B:CMY) vom Hauptspeicher (CMY),

- voneinander unabhängig in der Weise steuerbar sind, daß
  - in einen ersten Zeitschlitz eine erste Adresse für Lese- und/oder Schreibvorgänge von einem ersten der Prozessoren auf den Adressenübertragungs-Busleitungen zum Hauptspeicher (CMY) bzw. zu dessen Speicherbank (MB) übertragbar ist und
  - gleichzeitig, also im ersten Zeitschlitz, ein gelesener Speicherinhalt, der zu einer anderen zweiten vorher übertragenen Adresse gehört, zum betreffenden, ersten oder anderen, Prozessor auf den Speicherinhaltsübertragungs-Busleitungen vom Hauptspeicher (CMY) bzw. von dessen Speicherbank (MB) übertragbar ist.

## Claims

1. Multiprocessor controller, especially a multiprocessor control unit of a telephone switching system, comprising
   - a bus system (B:CMY), on the bus or buses of which time frames with time slots or time channels are set up in accordance with the time-division multiplex principle, to which the processors (SP, IOC), possibly exhibiting their own local memory (LMY), are connected and
   - a main memory (CMY) connected to the bus system (B;CMY) which contains a plurality of memory banks (MB) having in each case their own memory control, which controls the own memory bank (MB) independently of the memory control of the remaining memory banks (MB), and which can be alternately accessed by the processors (CP, IOC) via the bus system (B:CMY) and via which, if necessary, processors (CP, IOC) can communicate with one another, characterised in that each memory control is in each case permanently assigned one or more of the time channels formed on the bus or the buses of the bus system (B:CMY), which can be allocated to these processors for the quasi-simultaneous access of the processors (CP; IOC) to the various memory banks (MB).

2. Multiprocessor controller according to Patent Claim 1, characterised in that
   - each memory control is permanently assigned a single time channel,

- the time slots which are thus cyclically successively assigned to the memory controls, are in each allocated by means of arbitration to those processors (for example CP1, CPx, or IOCO) which request access to the relevant memory bank (for example MB3), and
- the clock frequency of the time slots is higher than the memory cycle frequency of the memory controls, at the most by T times if T is the number of memory banks (MB) of the main memory (CMY).

3. Multiprocessor controller according to Patent Claim 1 or 2, characterised in that
   - on the one hand, the multi-core, particularly doubled, address transmission bus lines of the bus system (B:CMY) to the main memory (CMY) and
   - on the other hand, the multi-core particularly doubled, memory content transmission bus lines of the bus system (B:CMY) from the main memory (CMY)
   - are mutually independently controllable in such a manner that
     - in a first time slot a first address for read and/or write processes can be transmitted from a first one of the processors on the address transmission bus lines to the main memory (CMY) or to its memory bank (MB) and
     - at the same time, that is to say in the first time slot, a read memory content which belongs to another, second address previously transmitted can be transferred to the relevant first or other processor on the memory content transmission bus lines from the main memory (CMY) or from its memory bank (MB), respectively.

## Revendications

1. Ordinateur à processeurs multiples, notamment unité centrale de commande à processeurs multiples d'un système de commutation téléphonique, comportant
   - un système de bus (B:CMY), dans le ou les bus duquel sont insérées, selon le principe du multiplexage temporel, des trames temporelles comportant des créneaux ou canaux temporels et auquel sont raccordés les processeurs (SP, IOC), qui comportent éventuellement une mémoire locale propre (LMY), et

- une mémoire principale (CMY), qui est raccordée au système de bus (B;CMY) et contient plusieurs blocs de mémoire (MB) comportant chacun une unité propre de commande de mémoire qui commande le bloc de mémoire particulier (MB), indépendamment de l'unité de commande de mémoire des autres blocs de mémoire (MB), et à laquelle les processeurs (CP, IOC) ont accès alternativement au moyen du système de bus (B:CMY) et par l'intermédiaire de laquelle des processeurs (CP, IOC) peuvent éventuellement communiquer entre eux, caractérisé par le fait qu'à chaque unité de commande de mémoire sont associés respectivement, de façon fixe, un ou plusieurs des canaux temporels raccordés au(x) bus du système de bus (B:CMY) et qui, pour l'accès quasi-simultané des processeurs (CP;IOC) aux différents blocs de mémoire (MB), peuvent être associés à ces processeurs.

2. Ordinateur à multiprocesseurs suivant la revendication 1, caractérisé par le fait que
    - à chaque unité de commande de mémoire est associé, de façon fixe, un seul canal temporel,
    - les créneaux temporels ainsi associés cycliquement, de façon successive, aux unités de commande de mémoire, sont affectés au moyen d'un arbitrage, respectivement aux processeurs (par exemple CP1, CPx, IOCO), qui demandent un accès au bloc de mémoire considéré (par exemple MB3), et
    - la fréquence de la cadence des canaux temporels est supérieure, au maximum du multiple T, à la fréquence du cycle de mémoire des unités de commande de mémoire, T représentant le nombre des blocs de mémoire (MB) de la mémoire principale (CMY).

3. Ordinateur à processeurs multiples suivant la revendication 1 ou 2, caractérisé par le fait que
    - d'une part les lignes à quatre fils, notamment doublées, formant bus de transmission d'adresses du système de bus (B:CMY), qui aboutissent à la mémoire principale (CMY), et
    - d'autre part les lignes quadrifilaires, notamment doublées, de transmission du contenu de la mémoire du système de bus (B:CMY), qui partent de la mémoire principale (CMY),

- peuvent être commandées d'une manière indépendante les unes des autres de telle sorte que
    - dans un premier créneau temporel, une première adresse pour des opérations de lecture et/ou d'enregistrement peut être transmise par un premier des processeurs dans les lignes formant bus de transmission d'adresses aboutissant à la mémoire principale (CMY) ou au bloc de mémoire (MB) de cette dernière, et
    - simultanément, c'est-à-dire pendant le premier créneau temporel, un contenu de mémoire lu, qui est associé à une seconde autre adresse transmise précédemment, peut être transmise au premier ou à un autre processeur considéré, dans les lignes formant bus de transmission du contenu de mémoire partant de la mémoire principale (CMY) ou du bloc de mémoire (MB) de cette dernière.